# EUROPÄISCHE PATENTANMELDUNG

(11) **EP 3 290 668 A1**
(43) Veröffentlichungstag der Anmeldung: **07.03.2018**
(21) Anmeldenummer: 17187771.5
(22) Anmeldetag: 24.08.2017
(51) Int. Cl.: F01N 3/04, F02G 5/02, F02B 37/18

(54) **ANTRIEBSVORRICHTUNG, INSBESONDERE FÜR EIN FAHRZEUG**

(30) Priorität: 02.09.2016 DE 102016010572
(71) Anmelder: MAN Truck & Bus AG, 80995 München (DE)
(72) Erfinder: Renner, Dominik, 91522 Ansbach (DE); Malischewski, Thomas, 91560 Heilsbronn (DE)
(74) Vertreter: Liebl, Thomas

(57) **Zusammenfassung**

Die Erfindung betrifft eine Antriebsvorrichtung, insbesondere für ein Fahrzeug, mit einer Brennkraftmaschine (3) und einem an die Brennkraftmaschine (3) angeschlossenen Abgasstrang (7), wobei der Abgasstrang (7) eine Abgas-Hauptleitung (25) mit wenigstens einer Abgasturbine (29) eines Abgasturboladers (15) und wenigstens einem, in Abgas-Strömungsrichtung gesehen, stromab der Abgasturbine angeordneten Katalysator aufweist, wobei der Abgasstrang (7) wenigstens eine Bypassleitung (39) aufweist, mittels der zumindest ein Teil des durch den Abgasstrang (7) strömenden Abgases (25) an einem Turbinenrad (41) der Abgasturbine (29) vorbeileitbar ist, dergestalt, dass das Abgas an wenigstens einem stromauf des Turbinenrads (41) angeordneten Abgas-Ausleitbereich (43) aus der Abgas-Hauptleitung (26) ausleitbar und in die Bypassleitung (39) einleitbar ist, und dass der durch die Bypassleitung (39) strömende Bypass-Abgasstrom an einem stromab des Turbinenrads (41) und stromauf des Katalysators (35) angeordneten Abgas-Einleitbereich wieder in die Abgas-Hauptleitung einleitbar ist. Erfindungsgemäß ist, insbesondere zum Verhindern einer Überhitzung des wenigstens einen Katalysators, eine Kühleinrichtung vorgesehen, mittels der der durch die Bypassleitung strömende Bypass-Abgasstrom kühlbar ist.

## Beschreibung

Die Erfindung betrifft eine Antriebsvorrichtung, insbesondere für ein Fahrzeug, nach dem Oberbegriff des Patentanspruchs 1, ein Verfahren zum Betreiben einer Antriebsvorrichtung nach dem Oberbegriff des Patentanspruchs 14 sowie ein Fahrzeug, insbesondere ein Nutzfahrzeug, mit der Antriebseinrichtung nach Patentanspruch 15.

Es ist allgemein bekannt, einen Abgasturbolader zu verwenden, um den Betrieb einer Brennkraftmaschine zu optimieren. Dabei ist es auch bekannt, an einem mit der Brennkraftmaschine verbundenen Abgasstrang eine Bypassleitung vorzusehen, mittels der zumindest ein Teil des durch den Abgasstrang strömenden Abgases an einem Turbinenrad einer Abgasturbolader-Turbine vorbeigeleitet werden kann. Mittels einer derartigen Bypassleitung kann einfach und effektiv verhindert werden, dass das Turbinenrad der Abgasturbine seine maximale Drehzahlgrenze überschreitet.

Aus der DE 103 31 653 A1 ist beispielsweise ein Abgasstrang bekannt, bei dem das Abgas, in Abgas-Strömungsrichtung gesehen, stromauf einer Abgasturbine eines Abgasturboladers aus einer Abgas-Hauptleitung des Abgasstrangs herausgeleitet und als Bypass-Abgasstrom in eine Bypassleitung eingeleitet wird. Stromab des Turbinenrads und stromauf eines Katalysators wird der Bypass-Abgasstrom dann wieder in die Abgas-Hauptleitung eingeleitet.

Des Weiteren ist es auch bekannt, an einen Abgasstrang einen SCR-Katalysator vorzusehen, mittels dem von der, insbesondere als Dieselmotor ausgebildeten, Brennkraftmaschine emittierte Stickoxide mit Ammoniak als Reduktionsmittel reduziert bzw. verringert werden. Das Ammoniak wird dabei üblicherweise in Form einer wässrigen Harnstofflösung stromauf des SCR-Katalysators in den Abgasstrang eingeleitet. Bei bestimmten Fahrzeugtypen, insbesondere bei Nutzfahrzeugen, haben sich SCR-Katalysatoren mit Vanadium als Aktivkomponente als besonders effektiv bei der Reduzierung der Stickoxide erwiesen. Diese vanadiumhaltigen SCR-Katalysatoren weisen jedoch eine relativ geringe Überhitzungstemperatur von etwa 500°C auf, ab der sich die Abgasreinigung verschlechtert und die Zersetzung des Katalysator einsetzt. Aufgrund der immer weiter ansteigenden spezifischen Leistungen der Brennkraftmaschinen und der dadurch ebenfalls ansteigenden Abgastemperaturen kommen insbesondere die vanadiumhaltigen SCR-Katalysatoren daher mittlerweile an ihre physikalischen Grenzen, was den Einsatz dieser Katalysatoren erschwert.

Aufgabe der Erfindung ist es daher, eine Antriebsvorrichtung, insbesondere für ein Fahrzeug, sowie ein Verfahren zum Betreiben einer Antriebsvorrichtung bereitzustellen, mittels denen einer Überhitzung eines Katalysators eines Abgasstrangs auf einfache und effektive Weise entgegengewirkt werden kann.

Diese Aufgabe wird gelöst mit den Merkmalen der unabhängigen Patentansprüche. Bevorzugte Weiterbildungen sind in den Unteransprüchen offenbart.

Gemäß Patenanspruch 1 wird eine Antriebsvorrichtung, insbesondere für ein Fahrzeug, vorgeschlagen, mit einer Brennkraftmaschine und einem an die Brennkraftmaschine angeschlossenen Abgasstrang, wobei der Abgasstrang eine Abgas-Hauptleitung mit wenigstens einer Abgasturbine eines Abgasturboladers und wenigstens einem, in Abgas-Strömungsrichtung gesehen, stromab der Abgasturbine angeordneten Katalysator aufweist, wobei der Abgasstrang wenigstens eine Bypassleitung aufweist, mittels der zumindest ein Teil des durch den Abgasstrang strömenden Abgases an einem Turbinenrad der Abgasturbine vorbeigeleitet werden kann, dergestalt, dass das Abgas an wenigstens einem stromauf des Turbinenrads angeordneten Abgas-Ausleitbereich aus der Abgas-Hauptleitung ausgeleitet und in die Bypassleitung eingeleitet werden kann. Der durch die Bypassleitung strömende Bypass-Abgasstrom kann zudem an einem stromab des Turbinenrads und stromauf des Katalysators angeordneten Abgas-Einleitbereich wieder in die Abgas-Hauptleitung eingeleitet werden. Erfindungsgemäß ist, insbesondere zum Verhindern einer Überhitzung des wenigstens einen Katalysators, eine Kühleinrichtung vorgesehen, mittels der der durch die Bypassleitung strömende Bypass-Abgasstrom gekühlt werden kann.

Dadurch kann einer Überhitzung des stromab der Abgasturbine angeordneten Katalysators einfach und effektiv entgegengewirkt werden, da der an dem Turbinenrad der Abgasturbine vorbeigeleitete Abgasstrom nun mittels der erfindungsgemäßen Kühleinrichtung gekühlt werden kann. Der gekühlte Bypass-Abgasstrom wird dann stromauf des wenigstens einen Katalysators wieder in die Abgas-Hauptleitung eingeleitet, wodurch sich die Abgastemperatur im Bereich des Katalysators verringert und der Katalysator nicht mehr so stark aufgeheizt wird. Die Bypassleitung übernimmt hier somit zwei Funktionen. Einerseits kann über den Bypass-Massenstrom der Ladedruck eingeregelt werden, da in Abhängigkeit des Bypass-Massenstroms der Massenstrom über das Turbinenrad steigt oder sinkt und somit auch der Ladedruck der Brennkraftmaschine steigt oder sinkt. Zudem kann dem Bypass-Massenstrom thermische Energie entzogen werden, wodurch sich stromab des Abgas-Einleitbereichs eine niedrigere Abgastemperatur einstellt als bei einem System ohne die erfindungsgemäße Kühleinrichtung.

In einer bevorzugten Ausgestaltung der erfindungsgemäßen Antriebsvorrichtung ist die Kühleinrichtung dabei derart ausgebildet, dass mittels dieser die maximale Abgastemperatur im Bereich des als SCR-Katalysators ausgebildeten Katalysators um mindestens 20°C, bevorzugt um mindestens 40°C, verringert werden kann. Dadurch kann einer Überhitzung des SCR-Katalysators bereits effektiv entgegengewirkt werden.

In einer bevorzugten konkreten Ausgestaltung weist die Kühleinrichtung wenigstens einen, der Bypassleitung zugeordneten Bypass-Wärmeübertrager auf, mittels dem Wärme von dem durch die Bypassleitung strömenden Bypass-Abgasstrom abgeführt werden kann. Mittels eines derartigen Bypass-Wärmeübertragers kann der durch die Bypassleitung strömende Bypass-Abgasstrom effektiv gekühlt werden. Zudem kann mittels eines derartigen Wärmeübertragers die Kühlung des Bypass-Abgasstroms bzw. die von dem Bypass-Abgasstrom abgeführte Wärmemenge auch auf einfache Weise wie gewünscht eingestellt werden. Zweckmäßig kann der Bypass-Wärmeübertrager dabei von einem flüssigen Kühlmittel durchströmt werden. Der Bypass-Wärmeübertrager kann beispielsweise nach dem Gegenstromprinzip, nach dem Gleichstromprinzip oder nach dem Kreuzstromprinzip arbeiten. In einer besonders bevorzugten Ausgestaltung ist der Bypass-Wärmeübertrager zudem durch ein von der Abgasturbine separates Bauteil gebildet, um den Aufbau der erfindungsgemäßen Antriebseinrichtung zu vereinfachen.

In einer konkreten Ausgestaltung kann der Bypass-Wärmeübertrager beispielsweise Bestandteil eines Kühlmittelkreislaufs sein. Bevorzugt ist dabei vorgesehen, dass der Bypass-Wärmeübertrager in einem Kühlmittelkreislauf eingebunden ist, mittels dem nicht nur der Bypass-Abgasstrom, sondern auch die Brennkraftmaschine gekühlt werden kann.

Alternativ zu dem Kühlmittelkreislauf kann der Bypass-Wärmeübertrager auch Bestandteil eines Energie-Rückgewinnungssystems sein, mittels dem die Wärmeenergie des Abgases in eine nutzbare Energieform umgewandelt werden kann. In einer bevorzugten konkreten Ausgestaltung erfolgt die Energieumwandlung dabei mittels eines thermodynamischen Kreisprozesses, insbesondere mittels eines Clausius-Rankine-Kreisprozesses.

Vorteilhaft ist weiter eine Steuereinrichtung vorgesehen, mittels der die in die Bypassleitung eingeleitete Abgasmenge in Abhängigkeit von wenigstens einem Steuerparameter gesteuert werden kann. In einer bevorzugten konkreten Ausgestaltung weist die Steuereinrichtung zur Steuerung der in die Bypassleitung eingeleiteten Abgasmenge wenigstens ein Ventil auf. Vorzugsweise ist dieses wenigstens eine Ventil dabei der Bypassleitung zugeordnet, um den Aufbau der erfindungsgemäßen Antriebsvorrichtung zu vereinfachen. Alternativ oder zusätzlich könnte das Ventil aber auch als abgasturbinenseitiges Wastegate-Ventil ausgebildet sein. Ein derartiges Wastegate-Ventil weist einen durch ein Turbinengehäuse der Abgasturbine gebildeten Ventilsitz und einen relativ zu dem Turbinengehäuse verlagerbaren Ventilkörper auf.

Bevorzugt weist die Steuereinrichtung ein Steuergerät auf, mittels dem das, vorzugsweise elektrisch betätigbare, Ventil zur Einstellung wenigstens einer definierten Ventilstellung angesteuert werden kann. Mit einer derartigen Steuerung kann die in die Bypassleitung eingeleitete Abgasmenge einfach und zuverlässig wie gewünscht eingestellt werden. Bevorzugt ist dabei vorgesehen, dass der wenigstens eine Steuerparameter durch den Ladedruck der durch einen Ansaugtrakt der Brennkraftmaschine strömenden Verbrennungsluft und/oder durch die Abgastemperatur im Bereich des wenigstens einen Katalysators gebildet ist. Der Ladedruck der durch den Ansaugtrakt strömenden Verbrennungsluft kann dabei beispielsweise mittels eines signaltechnisch mit dem Steuergerät verbundenen Drucksensors gemessen werden. Ebenso kann beispielsweise auch die Abgastemperatur im Bereich des Katalysators mittels eines im Bereich des Katalysators angeordneten, signaltechnisch mit dem Steuergerät verbundenen Temperatursensor gemessen werden.

Alternativ zu der Steuerung mit dem Steuergerät kann das wenigstens eine Ventil auch durch ein durch Luftdruck betätigbares Ventil gebildet sein, wobei das Ventil strömungstechnisch mit einem Ansaugtrakt der Brennkraftmaschine verbunden ist, dergestalt, dass sich das Ventil in Abhängigkeit von dem Ladedruck der durch den Ansaugtrakt strömenden Verbrennungsluft als Steuerungsparameter selbsttätig bzw. automatisch öffnet und schließt. Mit einem derartigen Ventil kann die in die Bypassleitung eingeleitete Abgasmenge zuverlässig und effektiv in Abhängigkeit von dem Ladedruck der Verbrennungsluft gesteuert werden.

Grundsätzlich wäre es natürlich denkbar, den Abgas-Ausleitbereich unmittelbar an der Abgasturbine vorzusehen. Bevorzugt ist es jedoch, wenn der Abgas-Ausleitbereich, in Abgas-Strömungsrichtung gesehen, stromauf der Abgasturbine angeordnet ist, um den Aufbau der erfindungsgemäßen Antriebsvorrichtung einfach zu halten. Ebenso bevorzugt kann auch der Abgas-Einleitbereich, in Abgas-Strömungsrichtung gesehen, stromab der Abgasturbine angeordnet werden.

Zweckmäßig kann die Haupt-Abgaseinleitung einen, insbesondere durch wenigstens einen Abgaskrümmer gebildeten, Abgas-Vereinigungsabschnitt aufweisen, mittels dem mehrere von der Brennkraftmaschine kommende Teil-Abgasströme zu einem einzigen Gesamt-Abgasstrom vereinigt werden können. Bevorzugt ist dabei vorgesehen, dass ein Vereinigungsbereich des Abgasstrangs, an dem sich die Teil-Abgasströme zu dem Gesamt-Abgasstrom vereinigen, stromauf der Abgasturbine und/oder stromauf des Turbinenrads der Abgasturbine angeordnet ist, um den Gesamt-Abgasstrom über die Abgasturbine bzw. über das Turbinenrad der Abgasturbine zu leiten.

In einer bevorzugten Ausgestaltung ist der wenigstens eine Abgas-Ausleitbereich des Abgasstrangs stromab des Abgasstrom-Vereinigungsbereichs angeordnet. Auf diese Weise kann zumindest ein Teil des vereinigten Gesamt-Abgasstroms in die Bypassleitung eingeleitet werden. Bevorzugt ist dabei vorgesehen, dass der wenigstens eine Abgas-Ausleitbereich des Abgasstrangs in einen definierten Nahbereich im Bereich der Abgasturbine angeordnet ist. Alternativ zu der Anordnung des Abgas-Ausleitbereichs stromab des Abgasstrom-Vereinigungsbereichs kann der Abgas-Ausleitbereich auch stromauf des Abgasstrom-Vereinigungsbereichs angeordnet sein. Dadurch kann wenigstens ein Teil-Abgasstrom in die Bypassleitung eingeleitet werden.

Bevorzugt ist dabei vorgesehen, dass an mehreren, insbesondere an zwei, jeweils von einem Teil-Abgasstrom durchströmten Leitungsabschnitten der Haupt-Abgasleitung jeweils wenigstens ein Abgas-Ausleitbereich vorgesehen ist, um mehrere Teil-Abgasströme in die Bypassleitung einleiten zu können und somit eine mehrflutige Abgaseinleitung zu realisieren.

In einer konkreten Ausgestaltung kann die Antriebseinrichtung auch mehrere, insbesondere zwei, Abgasturbolader aufweisen. Bevorzugt ist dabei vorgesehen, dass der Abgas-Ausleitbereich stromauf der Turbinenräder der mehreren Abgasturbolader angeordnet ist. Der Abgas-Einleitbereich kann dann stromab der Turbinenräder aller Abgasturbolader oder, in Abgas-Strömungsrichtung gesehen, zwischen zwei Turbinenrädern der mehreren Abgasturbolader angeordnet ist. Auf diese Weise kann einer Überhitzung eines stromab der Abgasturbinen angeordneten Katalysators bei einer mehrstufigen Aufladung der Brennkraftmaschine einfach und effektiv entgegengewirkt werden.

Vorzugsweise ist der wenigstens eine Katalysator durch einen SCR-Katalysator gebildet, mittels dem Stickoxide des von der Brennkraftmaschine emittierten Abgases mit Ammoniak als Reduktionsmittel reduziert werden können. Bevorzugt weist der SCR-Katalysator zudem als Aktivkomponente Vanadium auf.

Zur Lösung der bereits genannten Aufgabe wird ferner ein Verfahren zum Betreiben einer Antriebsvorrichtung beansprucht, wobei die Antriebsvorrichtung eine Brennkraftmaschine und einen an die Brennkraftmaschine angeschlossenen Abgasstrang aufweist, wobei der Abgasstrang eine Abgas-Hauptleitung mit wenigstens einer Abgasturbine eines Abgasturboladers und wenigstens einen, in Abgas-Strömungsrichtung gesehen, stromab der Abgasturbine angeordneten Katalysator aufweist, wobei der Abgasstrang wenigstens eine Bypassleitung aufweist, mittels der zumindest ein Teil des durch den Abgasstrang strömenden Abgases an einem Turbinenrad der Abgasturbine vorbeigeleitet wird, dergestalt, dass das Abgas an wenigstens einem stromauf des Turbinenrads angeordneten Abgas-Ausleitbereich aus der Abgas-Hauptleitung ausgeleitet und in die Bypassleitung eingeleitet wird. Der durch die Bypassleitung strömende Bypass-Abgasstrom wird dann an einem stromab des Turbinenrads und stromauf des Katalysators angeordneten Abgas-Einleitbereich wieder in die Abgas-Hauptleitung eingeleitet. Erfindungsgemäß ist, insbesondere zum Verhindern einer Überhitzung des wenigstens einen Katalysators, eine Kühleinrichtung vorgesehen, mittels der der durch die Bypassleitung strömende Bypass-Abgasstrom gekühlt wird. Bevorzugt ist dabei zudem vorgesehen, dass eine Steuereinrichtung vorgesehen ist, mittels der die in die Bypassleitung eingeleitete Abgasmenge und/oder die Kühlleistung der Kühleinrichtung in Abhängigkeit von wenigstens einem Steuerparameter gesteuert wird.

Die sich durch die erfindungsgemäße Verfahrensführung ergebenden Vorteile sind identisch mit den bereits gewürdigten Vorteilen der erfindungsgemäßen Antriebsvorrichtung, so dass diese an dieser Stelle nicht wiederholt werden.

Des Weiteren wird auch ein Fahrzeug, insbesondere ein Nutzfahrzeug, mit der erfindungsgemäßen Antriebseinrichtung beansprucht. Die sich hieraus ergebenden Vorteile sind ebenfalls identisch mit den bereits gewürdigten Vorteilen der erfindungsgemäßen Antriebsvorrichtung und werden hier ebenfalls nicht wiederholt.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Figur 1: eine schematische Darstellung, aus der der Aufbau einer ersten Ausführungsform einer erfindungsgemäßen Antriebsvorrichtung hervorgeht;
- Figur 2: eine Darstellung gemäß Figur 1, bei der im Vergleich zur Figur 1 ein Bypass-Abgasstrom durch eine Bypassleitung der Antriebsvorrichtung freigegeben ist;
- Figur 3: in einer Darstellung gemäß Figur 2 eine zweite Ausführungsform einer erfindungsgemäßen Antriebsvorrichtung;
- Figur 4: in einer Darstellung gemäß Figur 2 eine dritte Ausführungsform einer erfindungsgemäßen Antriebsvorrichtung;
- Figur 5: in einer Darstellung gemäß Figur 2 eine vierte Ausführungsform einer erfindungsgemäßen Antriebsvorrichtung;
- Figur 6: in einer Darstellung gemäß Figur 2 eine fünfte Ausführungsform einer erfindungsgemäßen Antriebsvorrichtung;
- Figur 7: in einer Darstellung gemäß Figur 2 eine sechste Ausführungsform einer erfindungsgemäßen Antriebsvorrichtung; und
- Figur 8: in einer schematischen Darstellung einen Teil einer siebten Ausführungsform einer erfindungsgemäßen Antriebsvorrichtung.

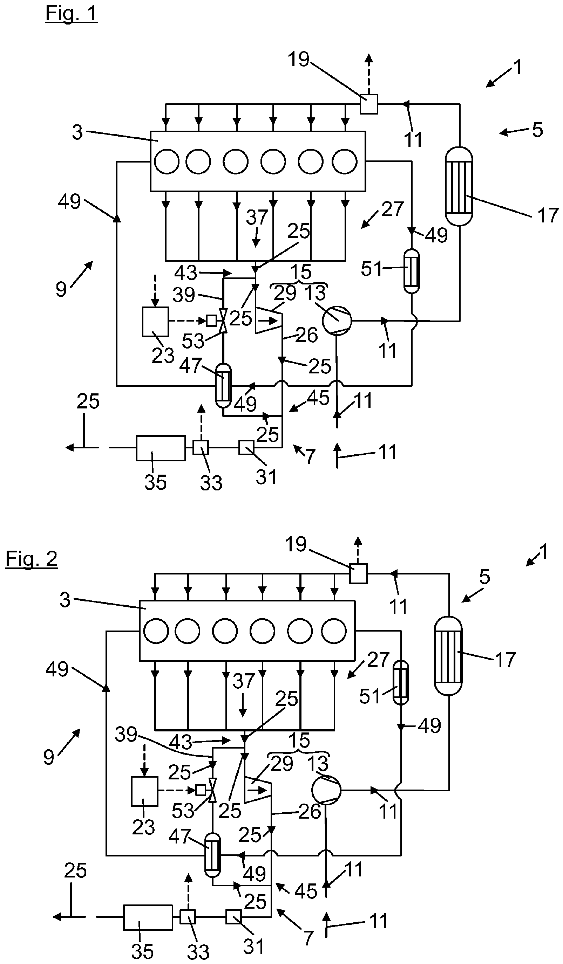

In Figur 1 ist eine erste Ausführungsform einer erfindungsgemäßen Antriebsvorrichtung 1 in einer schematischen Darstellung gezeigt. Die Antriebsvorrichtung 1 weist eine Brennkraftmaschine 3 mit hier beispielhaft sechs Zylindern, einen Ansaugtrakt 5, einen Abgasstrang 7 und einen Kühlmittelkreislauf 9 auf.

Mittels des Ansaugtrakts 5 wird der Brennkraftmaschine 3 dabei Verbrennungsluft 11 aus der freien Umgebung zugeführt. Der Ansaugtrakt 5 weist hier dabei, in Luft-Strömungsrichtung gesehen, einen Verdichter 13 eines Abgasturboladers 15, einen Luftkühler 17 sowie einen Drucksensor 19 auf. Mittels des Verdichters 13 wird die in den Ansaugtrakt 5 eingesaugte Verbrennungsluft 11 zunächst verdichtet. Anschließend wird die verdichtete Verbrennungsluft 11 mittels des Luftkühlers 17 abgekühlt und schließlich der Brennkraftmaschine 3 zugeführt. Mittels des Drucksensors 19 wird der Ladedruck der Verbrennungsluft 11 unmittelbar vor der Brennkraftmaschine 3 gemessen. Der mittels des Drucksensors gemessene Ladedruck wird dann an ein signaltechnisch mit dem Drucksensor 21 verbundenes Steuergerät 23 der Antriebsvorrichtung 1 übermittelt.

Des Weiteren wird mittels des an die Brennkraftmaschine 3 angeschlossenen Abgasstrangs 7 ein von der Brennkraftmaschine 3 emittierte Abgas 25 in die freie Umgebung geleitet. Der Abgasstrang 7 weist hier dabei eine Haupt-Abgasleitung 26 auf, die, in Abgas-Strömungsrichtung gesehen, einen Abgas-Vereinigungsabschnitt 27, eine Abgasturbine 29 des Abgasturboladers 15, einen Injektor 31, einen Temperatursensor 33 und einen SCR-Katalysator 35 aufweist.

Mittels des Abgas-Vereinigungsabschnitts 27 werden die hier beispielhaft sechs von den Zylindern der Brennkraftmaschine 3 kommenden Teil-Abgasströme zu einem einzigen Gesamt-Abgasstrom vereint. Der Abgas-Vereinigungsabschnitt 27 ist hier beispielhaft durch ein einziges Abgaskrümmerlement gebildet, das hier beispielhaft sechs Einströmöffnungen und eine einzige Ausströmöffnung aufweist. Ein Vereinigungsbereich 37, an dem sich die Teil-Abgasströme zu dem Gesamt-Abgasstrom vereinigen, ist hier zudem stromauf der Abgasturbine 29 angeordnet.

Weiter wird mit dem durch die Haupt-Abgasleitung 26 strömenden Abgas 25 die Abgasturbine 29 des Abgasturboladers 15 angetrieben. Mittels des Injektors 31 kann hier beispielhaft eine wässrige Harnstofflösung in die Haupt-Abgasleitung 26 eingespritzt werden. Mittels des hier unmittelbar vor bzw. stromauf des SCR-Katalysators 35 angeordneten Temperatursensors 33 wird die Abgastemperatur unmittelbar vor dem SCR-Katalysator 35 gemessen. Die mittels des Temperatursensors 33 gemessene Abgastemperatur wird dann an das signaltechnisch mit dem Temperatursensor 33 verbundene Steuergerät 23 übermittelt. Mittels des SCR-Katalysators 35 werden Stickoxide des von der Brennkraftmaschine 3 emittierten Abgases 25 mit Ammoniak als Reduktionsmittel reduziert bzw. verringert. Das Ammoniak wird dabei durch die mittels des Injektors 31 in die Haupt-Abgasleitung 24 eingeleitete wässrige Harnstofflösung bereitgestellt. Zudem weist der SCR-Katalysator 35 hier beispielhaft Vanadium als Aktivkomponente auf.

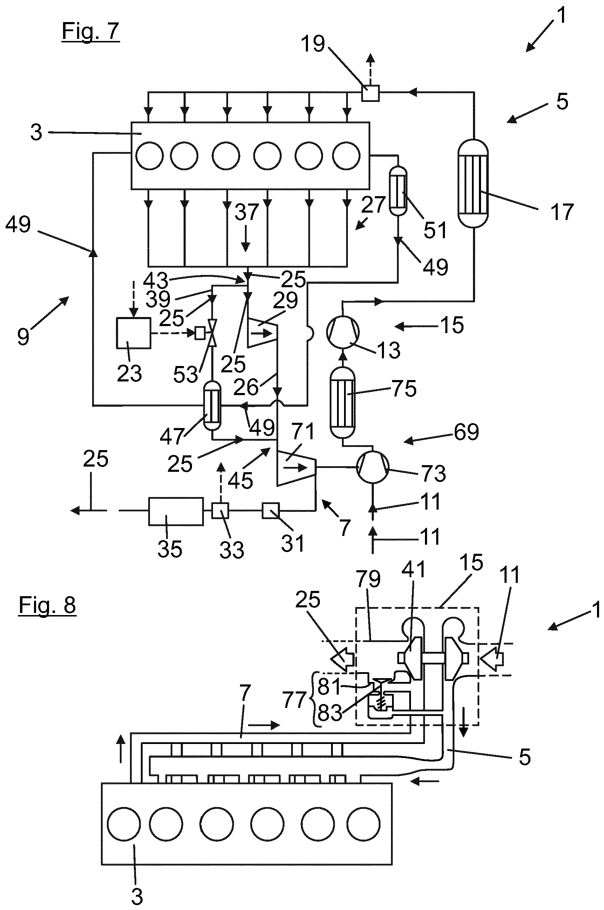

Wie aus Figur 1 weiter hervorgeht, weist der Abgasstrang 7 auch eine Bypassleitung 39 auf. Mittels dieser Bypassleitung 39 kann zumindest ein Teil des durch den Abgasstrang 7 strömenden Abgases 25 an einem Turbinenrad 41 (Fig. 8) der Abgasturbine 29 vorbeigeleitet werden. Das Abgas 25 wird hier dabei an einem stromab des Vereinigungsbereichs 37 und stromauf der Abgasturbine 29 angeordneten Abgas-Ausleitbereich 43 aus der Abgas-Hauptleitung 26 ausgeleitet und in die Bypassleitung 39 eingeleitet. An einem stromab der Abgasturbine 29 und stromauf des Injektors 31 angeordneten Abgas-Einleitbereich 45 wird der durch die Bypassleitung 39 strömende Bypass-Abgasstrom dann wieder in die Abgas-Hauptleitung 26 eingeleitet.

Gemäß Figur 1 ist der Bypassleitung 39 hier zudem ein Wärmeübertrager 47 zugeordnet, mittels dem Wärme von dem durch die Bypassleitung 39 strömenden Bypass-Abgasstrom abgeführt werden kann bzw. mittels dem der durch die Bypassleitung 39 strömende Bypass-Abgasstrom gekühlt werden kann. Der Bypass-Wärmeübertrager ist hier dabei Bestandteil des Kühlmittelkreislaufs 9 und wird von einem flüssigen Kühlmittel 49 des Kühlmittelkreislaufs 9 durchströmt. Mittels des Kühlmittelkreislaufs 9 wird hier dabei nicht nur der Bypass-Abgasstrom, sondern auch die Brennkraftmaschine 3 gekühlt. Der Kühlmittelkreislauf 9 weist dabei, in Kühlmittel-Strömungsrichtung gesehen, den Bypass-Wärmeübertrager 47, die Brennkraftmaschine 3 und einen Kühlmittelkühler 51 auf.

Wie in Figur 1 weiter gezeigt ist, ist der Bypassleitung 39 ein hier beispielhaft als Durchgangsventil ausgebildetes Ventil 53 zugeordnet, mittels dem die in die Bypassleitung 39 eingeleitete Abgasmenge gesteuert werden kann. Das Ventil 53 ist hier dabei, in Abgas-Strömungsrichtung gesehen, stromauf des Bypass-Wärmeübertragers 47 angeordnet. Zudem ist das hier beispielhaft elektrisch betätigbare Ventil 53 signaltechnisch mit dem Steuergerät 23 verbunden, so dass das Ventil 53 von dem Steuergerät 23 angesteuert werden kann. Dadurch kann die Ventilöffnung bzw. die Ventilstellung des Ventils 53 in Abhängigkeit von dem mittels des Drucksensors 29 erfassten Ladedruck und der mittels des Temperatursensors 33 erfassten Temperatur mittels des Steuergeräts 23 gesteuert bzw. eingestellt werden. In Figur 1 befindet sich das Ventil 53 dabei in seiner geschlossenen Stellung. In dieser geschlossenen Stellung versperrt das Ventil 53 die Bypassleitung 39, so dass kein Abgas 25 an dem Ventil 53 vorbeiströmen kann. In Figur 2 befindet sich das Ventil 53 in seiner offenen Stellung. In dieser offenen Stellung kann das Abgas dann an dem Ventil 53 vorbeiströmen und somit sowohl über die Abgasturbine 29 als auch über den Bypass-Wärmeübertrager 47 strömen. Das über Bypassleitung 39 strömende Abgas 25 wird dann mittels des Bypass-Wärmeübertragers 47 gekühlt, wodurch einer Überhitzung des SCR-Katalysators 35 effektiv entgegengewirkt wird.

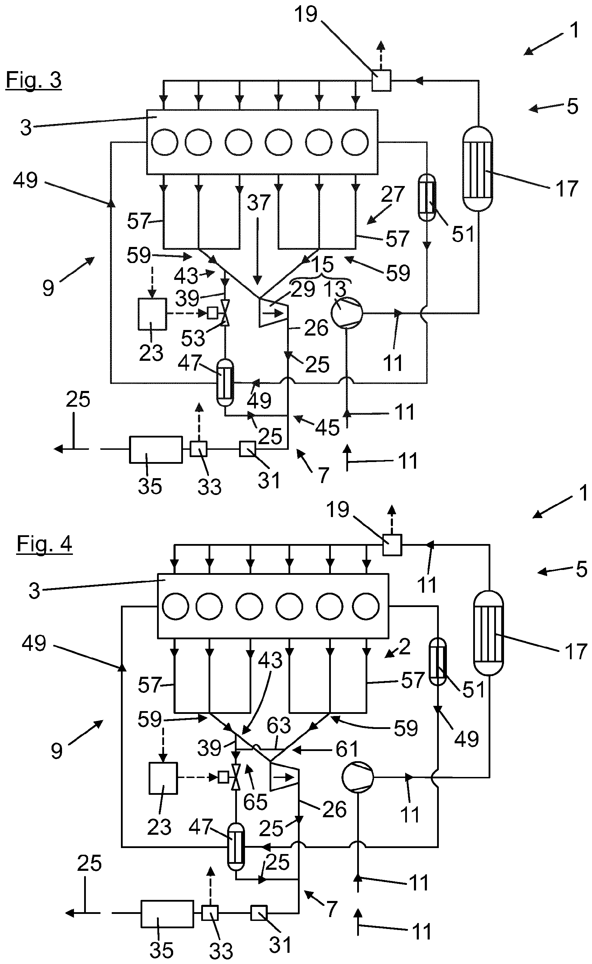

In Figur 3 ist eine zweite Ausführungsform der erfindungsgemäßen Antriebsvorrichtung 1 gezeigt. Im Vergleich zu der in Figur 2 gezeigten ersten Ausführungsform ist der Abgas-Vereinigungsbereich 37 hier nicht stromauf der Abgasturbine 29, sondern direkt an der Abgasturbine 29 angeordnet. Zudem ist der Abgas-Vereinigungsabschnitt 27 hier beispielhaft durch zwei separate Abgaskrümmerelemente 57 gebildet, von denen jedes hier beispielhaft drei Eintrittsöffnungen und eine einzige Austrittsöffnung aufweist. Jedes Abgaskrümmerelement 57 ist hier dabei mittels Flanschverbindungen an die Brennkraftmaschine 3 und an die Abgasturbine 29 angeschlossen. Zudem weist jedes Abgaskrümmerelement 57 hier auch einen Vereinigungsbereich 59 auf, an dem sich die durch das jeweilige Abgaskrümmerelement 57 einströmenden Teil-Abgasströme zu einem einzigen Abgasstrom vereinigen. Der Abgas-Ausleitbereich 43 ist hier zudem stromab des Verbindungsbereichs 59 und stromauf der Abgasturbine 29 an einem der beiden Abgaskrümmerelemente 57 vorgesehen.

In Figur 4 ist eine dritte Ausführungsform der erfindungsgemäßen Antriebsvorrichtung 1 gezeigt. Im Vergleich zu der in Figur 3 gezeigten Ausführungsform ist hier stromab des Vereinigungsbereichs 59 und stromauf der Abgasturbine 29 an dem anderen der beiden Abgaskrümmerelement 57 ein weiterer Abgas-Ausleitbereich 61 vorgesehen. An diesem Abgas-Ausleitbereich 61 kann das durch das Abgaskrümmerelement 57 strömende Abgas 25 dann in eine Bypassleitung 63 einströmen, die an einem Vereinigungsbereich 65 in die Bypassleitung 39 mündet. Der Vereinigungsbereich 65 ist hier dabei stromauf des Ventils 53 angeordnet.

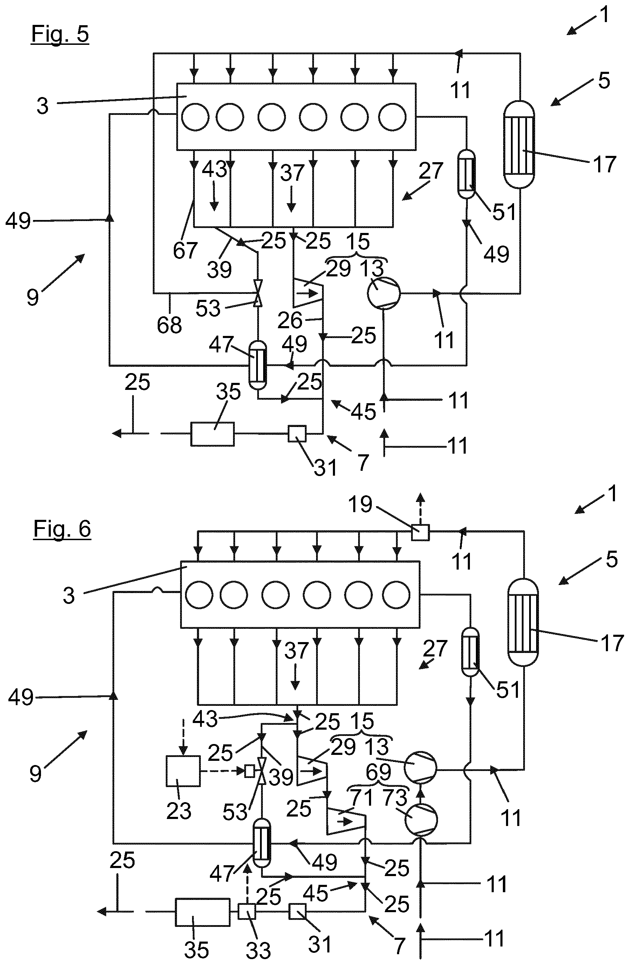

In Figur 5 ist eine vierte Ausführungsform der erfindungsgemäßen Antriebsvorrichtung 1 gezeigt. Im Vergleich zu der in Figur 2 gezeigten ersten Ausführungsform ist der Abgas-Ausleitbereich 43 hier nicht stromab des Abgas-Vereinigungsbereichs 37, sondern stromauf des Abgas-Vereinigungsbereichs 37 angeordnet. Konkret ist der Abgas-Ausleitbereich 43 hier einer äußeren Abgasleitung 67 des Abgaskrümmerelements zugeordnet, durch die ein äußerer Teil-Abgasstrom der Brennkraftmaschine 3 strömt. Zudem ist das Ventil 53 hier durch ein durch Luftdruck betätigbares Ventil gebildet. Das Ventil 53 ist dabei über eine Druckleitung 68 strömungstechnisch mit dem Ansaugtrakt 3 der Brennkraftmaschine verbunden, so dass sich das Ventil 53 in Abhängigkeit von dem Ladedruck der durch den Ansaugtrakt 3 strömenden Verbrennungsluft 11 selbsttätig bzw. automatisch öffnet und schließt.

In Figur 6 eine fünfte Ausführungsform der erfindungsgemäßen Antriebsvorrichtung gezeigt. Im Vergleich zu der in Figur 2 gezeigten ersten Ausführungsform weist die Antriebsvorrichtung 1 hier einen weiteren Abgasturbolader 69 auf. Der Abgasturbolader 69 bildet hier dabei einen Niederdruck-Abgasturbolader auf und weist eine, in Abgas-Strömungsrichtung gesehen, stromab der Abgasturbine 29 und stromauf des Abgas-Einleitbereichs 45 angeordnete Niederdruck-Abgasturbine 71 und einen, in Verbrennungsluft-Strömungsrichtung gesehen, stromauf des Verdichters 13 angeordneten Niederdruck-Verdichter 73 auf. Der Abgasturbolader 15 bildet hier zudem einen Hochdruck-Abgasturbolader aus.

In Figur 7 ist eine sechste Ausführungsform der erfindungsgemäßen Antriebsvorrichtung gezeigt. Im Vergleich zu der in Figur 6 gezeigten Ausführungsform ist der Abgas-Einleitbereich 45 hier, in Abgas-Strömungsrichtung gesehen, zwischen den beiden Abgasturbinen 29, 71 des Abgasstrangs 7 angeordnet. Zudem ist hier, in Luft-Strömungsrichtung gesehen, zwischen den beiden Verdichtern 13, 73 ein weiterer Luftkühler 75 angeordnet.

In Figur 8 ist eine siebte Ausführungsform der erfindungsgemäßen Antriebsvorrichtung 7 gezeigt. Im Vergleich zu den in Figur 1 bis 7 gezeigten Ausführungsformen weist die Abgasturbine 29 hier zusätzlich ein Wastegate-Ventil 77 auf. Ein Turbinengehäuse 79 der Abgasturbine 29 bildet hier dabei einen Ventilsitz 81 des Wastegate-Ventils 77 aus. Zudem weist das Wastgate-Ventil 77 einen relativ zu dem Turbinengehäuse 79 verlagerbaren Ventilkörper bzw. Dichtkörper 83 auf.

**Bezugszeichenliste**

| | |
|---|---|
| 1 | Antriebsvorrichtung |
| 3 | Brennkraftmaschine |
| 5 | Ansaugtrakt |
| 7 | Abgasstrang |
| 9 | Kühlmittelkreislauf |
| 11 | Verbrennungsluft |
| 13 | Verdichter |
| 15 | Abgasturbolader |
| 17 | Luftkühler |
| 19 | Drucksensor |
| 23 | Steuergerät |
| 25 | Abgas |
| 26 | Haupt-Abgasleitung |
| 27 | Abgas-Vereinigungsabschnitt |
| 29 | Abgasturbine |
| 31 | Injektor |
| 33 | Temperatursensor |
| 35 | SCR-Katalysator |
| 37 | Vereinigungsbereich |
| 39 | Bypassleitung |
| 41 | Turbinenrad |
| 43 | Abgas-Ausleitbereich |
| 45 | Abgas-Einleitbereich |
| 47 | Bypass-Wärmeübertrager |
| 49 | Kühlmittel |
| 51 | Kühlmittelkühler |
| 53 | Ventil |
| 57 | Abgaskrümmerelement |
| 59 | Vereinigungsbereich |
| 61 | Abgas-Ausleitbereich |
| 63 | Bypassleitung |
| 65 | Vereinigungsbereich |
| 67 | äußere Abgasleitung |
| 68 | Druckleitung |
| 69 | Abgasturbolader |
| 71 | Abgasturbine |
| 73 | Verdichter |
| 75 | Luftkühler |
| 77 | Wastegate-Ventil |
| 79 | Turbinengehäuse |
| 81 | Ventilsitz 83 Ventilkörper |

## Patentansprüche

1. Antriebsvorrichtung, insbesondere für ein Fahrzeug, mit einer Brennkraftmaschine (3) und einem an die Brennkraftmaschine (3) angeschlossenen Abgasstrang (7), wobei der Abgasstrang (7) eine Abgas-Hauptleitung (25) mit wenigstens einer Abgasturbine (29) eines Abgasturboladers (15) und wenigstens einem, in Abgas-Strömungsrichtung gesehen, stromab der Abgasturbine (29) angeordneten Katalysator (35) aufweist, wobei der Abgasstrang (7) wenigstens eine Bypassleitung (39) aufweist, mittels der zumindest ein Teil des durch den Abgasstrang (7) strömenden Abgases (25) an einem Turbinenrad (41) der Abgasturbine (29) vorbeileitbar ist, dergestalt, dass das Abgas (25) an wenigstens einem stromauf des Turbinenrads (41) angeordneten Abgas-Ausleitbereich (43) aus der Abgas-Hauptleitung (26) ausleitbar und in die Bypassleitung (39) einleitbar ist, und dass der durch die Bypassleitung (39) strömende Bypass-Abgasstrom an einem stromab des Turbinenrads (41) und stromauf des Katalysators (35) angeordneten Abgas-Einleitbereich (45) wieder in die Abgas-Hauptleitung (26) einleitbar ist,
**dadurch gekennzeichnet,**
**dass**, insbesondere zum Verhindern einer Überhitzung des wenigstens einen Katalysators, eine Kühleinrichtung (9, 47) vorgesehen ist, mittels der der durch die Bypassleitung (39) strömende Bypass-Abgasstrom kühlbar ist.

2. Antriebsvorrichtung nach Anspruch 1, **dadurch gekennzeichnet, dass** die Kühleinrichtung wenigstens einen, der Bypassleitung (39) zugeordneten Bypass-Wärmeübertrager (47) aufweist, mittels dem Wärme von dem durch die Bypassleitung (39) strömenden Bypass-Abgasstrom abführbar ist, wobei bevorzugt vorgesehen ist, dass der Bypass-Wärmeübertrager von einem flüssigen Kühlmittel durchströmbar ist und/oder dass der Bypass-Wärmeübertrager (47) durch ein von der Abgasturbine (29) separates Bauteil gebildet ist.

3. Antriebsvorrichtung nach Anspruch 2, **dadurch gekennzeichnet, dass** der Bypass-Wärmeübertrager (47) Bestandteil eines Kühlmittelkreislaufs (9) ist, wobei bevorzugt vorgesehen ist, dass der Bypass-Wärmeübertrager (47) in einen Kühlmittelkreislauf (9) zur Kühlung der Brennkraftmaschine (3) eingebunden ist.

4. Antriebsvorrichtung nach Anspruch 2, **dadurch gekennzeichnet, dass** der Bypass-Wärmeübertrager (47) Bestandteil eines Energie-Rückgewinnungssystems ist, mittels dem die Wärmeenergie des Abgases in eine nutzbare Energieform umwandelbar ist, wobei bevorzugt vorgesehen ist, dass die Energieumwandlung mittels eines thermodynamischen Kreisprozesses, insbesondere mittels eines Clausius-Rankine-Kreisprozesses, erfolgt.

5. Antriebsvorrichtung nach einem der vorhergehenden Ansprüche, **dadurch gekennzeichnet, dass** eine Steuereinrichtung vorgesehen ist, mittels der die in die Bypassleitung (39) eingeleitete Abgasmenge in Abhängigkeit von wenigstens einem Steuerparameter steuerbar ist, wobei bevorzugt vorgesehen ist, dass die Steuereinrichtung zur Steuerung der in die Bypassleitung (39) eingeleiteten Abgasmenge wenigstens ein, insbesondere der Bypassleitung (39) zugeordnetes, Ventil (53) aufweist.

6. Antriebsvorrichtung nach Anspruch 5, **dadurch gekennzeichnet, dass** die Steuereinrichtung ein Steuergerät (23) aufweist, mittels dem das Ventil (53) zur Einstellung wenigstens einer definierten Ventilstellung ansteuerbar ist, wobei bevorzugt vorgesehen ist, dass der wenigstens eine Steuerparameter durch den Ladedruck der durch einen Ansaugtrakt (5) der Brennkraftmaschine (3) strömenden Verbrennungsluft und/oder durch die Abgastemperatur im Bereich des Katalysators (35) gebildet ist.

7. Antriebsvorrichtung nach Anspruch 5, **dadurch gekennzeichnet, dass** das wenigstens eine Ventil (53) durch ein durch Luftdruck betätigbares Ventil gebildet ist, wobei das Ventil strömungstechnisch mit einem Ansaugtrakt (5) der Brennkraftmaschine (3) verbunden ist, dergestalt, dass sich das Ventil (53) in Abhängigkeit von dem Ladedruck der durch den Ansaugtrakt (5) strömenden Verbrennungsluft (11) selbsttätig öffnet und schließt.

8. Antriebsvorrichtung nach einem der vorhergehenden Ansprüche, **dadurch gekennzeichnet, dass** der Abgas-Ausleitbereich (43) stromauf der Abgasturbine (29) angeordnet ist, und/oder dass der Abgas-Einleitbereich (45) stromab der Abgasturbine (29) angeordnet ist.

9. Antriebsvorrichtung nach einem der vorhergehenden Ansprüche, **dadurch gekennzeichnet, dass** die Haupt-Abgasleitung (26) einen, insbesondere durch wenigstens einen Abgaskrümmer gebildeten, Abgas-Vereinigungsabschnitt (27) aufweist, mittels dem mehrere von der Brennkraftmaschine (3) kommende Teil-Abgasströme zu einem einzigen Gesamt-Abgasstrom vereinigbar sind, wobei bevorzugt vorgesehen ist, dass ein Vereinigungsbereich (37) des Abgasstrangs (7), an dem sich die Teil-Abgasströme zu dem Gesamt-Abgasstrom vereinigen, stromauf der Abgasturbine (29) und/oder stromauf des Turbinenrads (41) der Abgasturbine (29) angeordnet ist.

10. Antriebsvorrichtung nach Anspruch 9, **dadurch gekennzeichnet, dass** der wenigstens eine Abgas-Ausleitbereich (43) des Abgasstrangs (7) stromab des Abgasstrom-Vereinigungsbereichs (37), insbesondere in einem definierten Nahbereich im Bereich der Abgasturbine (29), angeordnet ist, oder dass der wenigstens eine Abgas-Ausleitbereich (43) des Abgasstrangs (7)stromauf des Abgasstrom-Vereinigungsbereichs (37) angeordnet ist.

11. Antriebsvorrichtung nach Anspruch 9 oder 10, **dadurch gekennzeichnet, dass** an mehreren, insbesondere an zwei, jeweils von einem Teil-Abgasstrom durchströmten Leitungsabschnitten der Haupt-Abgasleitung (26) jeweils wenigstens ein Abgas-Ausleitbereich (43, 61) vorgesehen ist.

12. Antriebsvorrichtung nach einem der vorhergehenden Ansprüche, **dadurch gekennzeichnet, dass** mehrere, insbesondere zwei, Abgasturbolader (15, 69) vorgesehen sind, wobei bevorzugt vorgesehen ist, dass der wenigstens eine Abgas-Ausleitbereich (43) stromauf der Turbinenräder der mehreren Abgasturbolader (15, 69) angeordnet ist, und dass der Abgas-Einleitbereich (45) stromab der Turbinenräder der mehreren Abgasturbolader (15, 69) oder, in Abgas-Strömungsrichtung gesehen, zwischen zwei Turbinenrädern der mehreren Abgasturbolader (15, 69) angeordnet ist.

13. Antriebsvorrichtung nach einem der vorhergehenden Ansprüche, **dadurch gekennzeichnet, dass** der Katalysator (15) durch einen SCR-Katalysator gebildet ist, mittels dem Stickoxide des von der Brennkraftmaschine (3) emittierten Abgases (25) mit Ammoniak als Reduktionsmittel reduzierbar sind, wobei bevorzugt vorgesehen ist, dass der SCR-Katalysator (35) als Aktivkomponente Vanadium aufweist.

14. Verfahren zum Betreiben einer Antriebsvorrichtung, insbesondere einer Antriebsvorrichtung nach einem der vorhergehenden Ansprüche, wobei die Antriebsvorrichtung (1) eine Brennkraftmaschine (3) und einen an die Brennkraftmaschine (3) angeschlossenen Abgasstrang (7) aufweist, wobei der Abgasstrang eine Abgas-Hauptleitung mit wenigstens einer Abgasturbine eines Abgasturboladers und wenigstens einem, in Abgas-Strömungsrichtung gesehen, stromab der Abgasturbine angeordneten Katalysator aufweist, wobei der Abgasstrang (7) wenigstens eine Bypassleitung (39) aufweist, mittels der zumindest ein Teil des durch den Abgasstrang strömenden Abgases an einem Turbinenrad der Abgasturbine vorbeigeleitet wird, dergestalt, dass das Abgas an wenigstens einem stromauf des Turbinenrads angeordneten Abgas-Ausleitbereich (43) aus der Abgas-Hauptleitung (26) ausgeleitet und in die Bypassleitung (39) eingeleitet wird, und dass der durch die Bypassleitung strömende Bypass-Abgasstrom an einem stromab des Turbinenrads (41) und stromauf des Katalysators (35) angeordneten Abgas-Einleitbereich wieder in die Abgas-Hauptleitung (26) eingeleitet wird,
**dadurch gekennzeichnet,**
**dass**, insbesondere zum Verhindern einer Überhitzung des wenigstens einen Katalysators, eine Kühleinrichtung (9, 47) vorgesehen ist, mittels der der durch die Bypassleitung (39) strömende Bypass-Abgasstrom gekühlt wird, wobei bevorzugt vorgesehen ist, dass eine Steuereinrichtung vorgesehen ist, mittels der die in die Bypassleitung eingeleitete Abgasmenge und/oder die Kühlleistung der Kühleinrichtung in Abhängigkeit von wenigstens einem Steuerparameter gesteuert wird.

15. Fahrzeug, insbesondere Nutzfahrzeug, mit einer Antriebseinrichtung nach einem der Ansprüche 1 bis 13.
